# EUROPEAN PATENT SPECIFICATION

(11) **EP 3 012 438 B1**
(45) Date of publication and mention of the grant of the patent: **12.09.2018**
(21) Application number: 15188502.7
(22) Date of filing: 06.10.2015
(51) Int. Cl.: F02C 7/228, F02C 7/236, F02C 9/26, F02C 9/34, H02K 16/04

(54) **Gas turbine engine fuel system**
Gasturbinentriebwerkskraftstoffsystem
Système de carburant de moteur de turbine à gaz

(30) Priority: 21.10.2014 GB 201418685
(43) Date of publication of application: 27.04.2016
(73) Proprietor: Rolls-Royce plc, London SW1E 6AT (GB)
(72) Inventor: Edwards, Huw, Derby, Derbyshire DE24 8BJ (GB); Scanlon, Timothy, Derby, Derbyshire DE24 8BJ (GB); Wang, Yi, Derby, Derbyshire DE24 8BJ (GB); Cullen, John, Derby, Derbyshire DE24 8BJ (GB)
(74) Representative: Rolls-Royce plc

(56) References cited:
- EP-A2- 1 193 379
- EP-A2- 2 372 901
- US-A- 5 152 141
- US-A1- 2013 181 687
- US-A1- 2014 291 987

## Description

### Field of the Invention

The present invention relates to a fuel system for a gas turbine engine, and a gas turbine engine comprising a fuel system.

### Background to the Invention

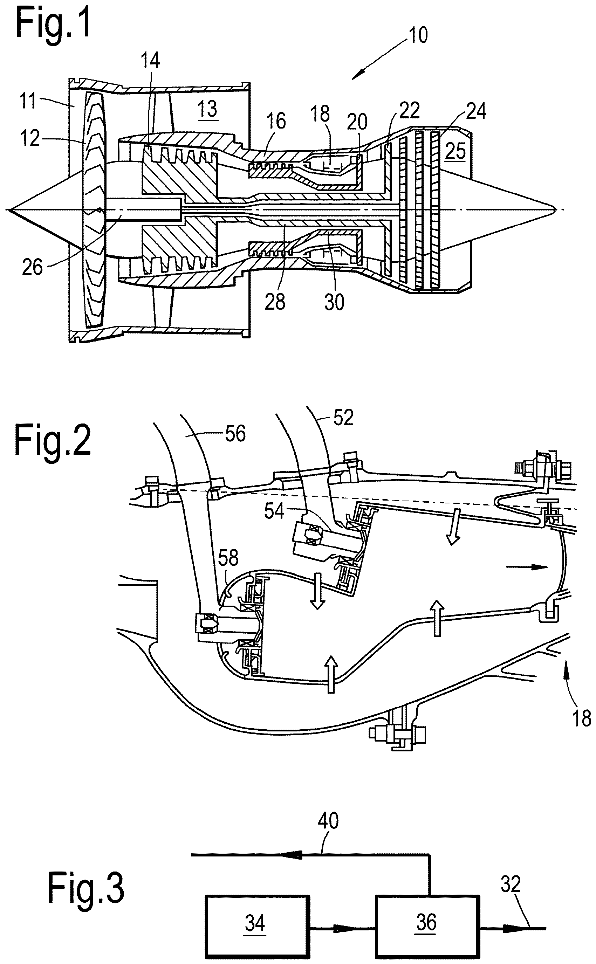

Fig. 1 shows a high-bypass gas turbine engine 10. The engine 10 comprises, in axial flow series, an air intake duct 11, an intake fan 12, a bypass duct 13, an intermediate pressure compressor 14, a high pressure compressor 16, a combustor 18, a high pressure turbine 20, an intermediate pressure turbine 22, a low pressure turbine 24 and an exhaust nozzle 25. The fan 12, compressors 14, 16 and turbines 20, 22, 24 all rotate about the major axis of the gas turbine engine 10 and so define the axial direction of gas turbine engine.

Air is drawn through the air intake duct 11 by the intake fan 12 where it is accelerated. A significant portion of the airflow is discharged through the bypass duct 13 generating a corresponding portion of the engine 10 thrust. The remainder is drawn through the intermediate pressure compressor 14 into what is termed the core of the engine 10 where the air is compressed. A further stage of compression takes place in the high pressure compressor 16 before the air is mixed with fuel and burned in the combustor 18. The resulting hot working fluid is discharged through the high pressure turbine 20, the intermediate pressure turbine 22 and the low pressure turbine 24 in series where work is extracted from the working fluid. The work extracted drives the intake fan 12, the intermediate pressure compressor 14 and the high pressure compressor 16 via shafts 26, 28, 30. The working fluid, which has reduced in pressure and temperature, is then expelled through the exhaust nozzle 25 and generates the remaining portion of the engine 10 thrust.

Fuel is provided to the combustor for combustion with the air by a fuel system. A prior fuel system is shown diagrammatically in Fig. 3. The fuel system includes a main fuel line 32, a fuel pump 34 (which may be mechanically driven by a shaft or may be driven by an electric motor), and a fuel metering unit (FMU) 36. Fuel is pumped from a fuel tank (not shown) by the pump 34 through the main fuel line 32 to the fuel metering unit 36. A portion of the fuel received by the FMU is delivered to a fuel injector located downstream of the FMU 36 within the combustor 18 to provide a metered flow rate of fuel to the engine. The remainder of the fuel is returned to the input of the pump, with excess fuel recirculated in line 40. By varying the proportion of fuel delivered to the combustor compared to the recirculated fuel, the rate of flow of fuel delivered to the combustor can be varied in dependence on the fuel demand, which is determined by an engine control unit (ECU or FADEC).

However, conventional fuel systems have several known problems. They require relatively high power demands, since the pump delivers an excess of fuel at all times, with a proportion recirculated. This arrangement is therefore relatively inefficient, leading to higher pump power requirements, and therefore increased fuel consumption, compared to a system in which only the required fuel flow is pumped. The FMU and the recirculation of the fuel can also increase the temperature of fuel flowing therethrough, leading to lacquering of the fuel, which may lead to blockages and limit the ability to use fuel as coolant.

One proposed solution is to vary the fuel flow rate is by employing an electric motor to drive the pump 34 to supply relatively more or less fuel in accordance with fuel demand. Such an arrangement reduces the need for a mechanical power offtake to drive the fuel pump, and is known in the art as a "More Electric Engine". However, it is a likely requirement for certification of gas turbine engines for civil aviation use that no one electrical failure (such as a short circuit) can result in an inability to supply the engine with sufficient fuel to run at full power. Consequently, redundant (i.e. completely separate, additional) or fault tolerant electrical motors are required, resulting in additional cost, complexity and weight.

The above problem is particularly marked in fuel systems for staged combustors. Fig. 2 shows a staged combustor 18 of the gas turbine engine 10 of Fig. 1. The staged combustor 18 comprises a pilot injector 54 and a main injector 58, each fed by respective independent fuel lines 52, 56. In the arrangement shown in Fig. 3, the pilot injector is provided at a radially outer position relative to the main injector. Other configurations are known, in which the main and pilot injectors are arranged concentrically. Staged combustors are designed to provide "lean burn" fuel combustion (i.e. the fuel is burnt at a ratio slightly lean of stoichiometric), thereby reducing nitrous oxide (NOx) emissions.

In use, fuel is always supplied from at least the pilot injector 54. At relatively high power engine conditions, fuel is also supplied from the main injector 58. The proportion of fuel provided by each of the injectors 54, 58 therefore varies during engine operation. In order to provide separate fuel flows for each injector 54, 58 independently of the other, two pumps or two FMUs are required. In general, where two pumps are provided, the pump for the main injector 58 is sized to be capable of delivering approximately 100% of the total fuel requirement to enable full power operation of the engine, whilst the pump for the pilot injector 54 is sized to provide approximately 50% of the total fuel required for full power operation. The pilot and main injectors are therefore, in combination, capable of providing more fuel flow than that required by the engine for full power operation. This is because in certain flight conditions extra pilot flow is required.

EP 1193379 discloses a fuel system for a gas turbine engine having a staged combustor, in which the fuel flows for the separate injectors are provided by pumps driven by variable speed electric motors, which deliver measured fuel direct from the pump.Since failure of the fuel system would result in shutdown of the engine, redundancy is required. In EP 1193379, this redundancy is provided by the provision of further connections between the pilot and main fuel lines with additional control valves being provided, and / or redundant fuel injectors. Such an arrangement leads to increased weight and complexity. Valves in this part of the fuel system are also known to cause airlocks and fuel degradation in the fuel line, leading to blockages. In the case of staged combustors, it is a requirement that sufficient fuel is provided to the combustor for full thrust control (typically around 90% power) in the event of a single electrical fault. EP2372901 A2 discloses electrical machines with fail-safe/fault-tolerant capabilities.

Several types of electrical motors are known. One known type is a synchronous motor. A synchronous motor may comprise any of a wound field, permanent magnet, switched reluctance, or reluctance rotor. Synchronous motors can also incorporate different flux paths: radial, axial, transverse, and different topologies such as "in-runners" (rotor inside the stator) or "out-runners" (rotor outside the stator). In synchronous motors, AC electrical power is provided to one or more electrical stators, which causes a rotating magnetic field to be produced. This magnetic field interacts with one or more magnets (either permanent or electromagnetic) provided as part of a rotor, which causes the rotor to rotate. Asynchronous motors are also known, such as induction motors. Here, the AC field in the stator induces a field on the rotor and the two fields interact causing rotation. However, in an asynchronous motor, the rotor must fundamentally lag the stator, to ensure there is relative motion between the rotor and stator, to ensure the induced rotor field is maintained. This is often referred to as slip.

Synchronous motors, such as permanent magnet synchronous motors are relatively lightweight, compact and efficient, and are capable of relatively high power outputs. However, in order to accurately control operation at a range of rotational speeds, power electronics units are required. Power electronics when used as a motor drive typically comprise solid state devices configured to take a DC power or an AC power having an input frequency and voltage, and produce an AC output power having a desired frequency and/or voltage to efficiently operate the AC motor at a desired speed. A separate power electronics unit is normally required for each electrical motor. In some cases, two power electronics units are required for each motor, to provide redundancy. Power electronics units add considerable cost and weight to an electrical system, and take up considerable space. Consequently, in a conventional staged combustor supplied with fuel by fuel pumps driven by variable speed electric motors, up to four fully rated (relative to their load) power electronics units may be required. Due to the high weight, expense and volume of these units, it is desirable to reduce the number of power electronics units.

In a separate problem, gas turbine engines also require an oil system to ensure supply of lubricant during use. The oil system is considered essential for safe operation of the engine, since lack of lubricant can rapidly lead to bearing and transmission overheating, and in some cases increased engine wear and possibly engine shut down.

Traditionally, gas turbine engines include oil pumps which are mechanically driven by an offtake from a main shaft of the gas turbine engine via a gearbox. Consequently, the oil pump is always operated when the engine is running.

However, in a More Electric Engine, it is desirable to delete the gearbox, thereby saving weight, since the gearbox is no longer required for driving the mechanical fuel pumps. Consequently, the oil pump needs to be driven by an electric pump. However, since the oil pump is an essential item for safe operation of the engine, redundancy must be provided for the oil pump. The provision of a further two electric motors and corresponding power electronics units to drive the oil pump may reduce the amount of weight saved by the deletion of the gearbox, or may even increase the weight of the system.

The present invention describes a fuel system and a gas turbine engine which seeks to overcome some or all of the above problems.

### Summary of the Invention

According to the present invention, there is provided a fuel system for a gas turbine engine, the gas turbine engine comprising a combustor having a pilot fuel injector and a main fuel injector, the fuel system comprising:
a first variable flow fuel pump configured to provide metered fuel flow to the pilot injector, and a second variable flow fuel pump configured to provide a metered fuel flow to the main injector;
first and second variable speed electric motors configured to drive respective first and second fuel pumps; wherein
each of the electric motors comprises a polyphase motor comprising a stator having concentrated windings, characterised in that each motor comprises at least first and second electrically isolated sets of polyphase stator windings, the first and second stator windings of each electrical motor being configured to drive a common rotor, and each set of polyphase stator windings comprising three electrical phases.

Advantageously, the invention provides a fuel system in which, in the event of a single electrical fault in one of the electrical phases of the electrical motors, sufficient fuel can still be provided to the combustor for full engine power operation. This is because loss of one of the electrically isolated stator windings (due to a short circuit for example) still enables the remaining electrically isolated stator windings to operate due to the non-overlapping concentrated windings. Therefore, in the case of a motor having first and second electrically isolated stator windings, the power produced by the motor is reduced by 50%. Since there is electrical redundancy with concentrated stator windings to provide motive power for each pump of the fuel system, the overall reduction in pumping capacity is never reduced below the minimum requirement to avoid loss of thrust control, typically around 90% of maximum capacity. However, in view of the excess capacity provided by the electrical motors, sufficient fuel can still be provided for full power operation on failure of one of the electrically isolated stator windings, albeit without provision of lean burn operation in all flight conditions.

Since both stators drive a common rotor, the weight and mechanical complexity of the electrical motors is significantly less than that of separate electrical motors, while still providing the necessary electrical redundancy.

The electrically isolated stator winding may each be thermally isolated, and may each be magnetically isolated from the other electrical stator windings. Consequently, physical damage to the first or second isolated stator windings will not cause a "cascade failure" in which the other stator windings are caused to fail.

One or both of the first and second electric motors may comprise a tandem dual wound electrical machine comprising a common rotor. Advantageously, the first and second set of stator windings are resistant to external faults causing cascade failure (such as a terminal fault), due to the separation of the magnetic circuits for the first and second sets of stator windings. Internal electrical faults (such as turn-to-turn faults in a winding) can also be cascade resistant through using separate windings on the rotor, so that one rotor can be "turned off', ensuring power is not pumping into the internal winding fault. The alternative is to use the power electronic unit to provide power into the working parts of the coil to oppose the power generated in the shorted section of the coil. This can be used to prevent heating in the winding.

Alternatively or in addition, one or both of the first and second electric motors may comprise a radial dual three phase machine. The stators of the first set of stator windings may be arranged alternately with the second set of stator windings, and may be circumferentially spaced. Advantageously, the electric motor can be relatively compact and lightweight, having a shorter length, given the need for end winding space in a tandem motor. With the addition of concentrated coils, where each slot only has windings from one coil (from one phase), internal turn to turn faults can also be mitigated, using know methods from EP 1647078 to oppose the field generated in the winding fault using the remaining unfaulted turns in the winding and the power electronics.

The fuel system may comprise one or more power electronics units configured to provide AC electrical power to the stator windings of the first and second electrical motors. The fuel system may comprise first and second power electronics units, each being configured to provide AC electrical power to a respective first and second electrical motor.

Each power electronics unit may comprise first and second electrically isolated outputs, each output being electrically coupled to a respective one of the set of stator windings of the respective motor to provide AC electrical power to the respective set of windings. Advantageously, an electrical fault with one output of the power electronics unit will not cause a failure in the other isolated electrical winding, thereby maintaining redundancy. On the other hand, only a single power electronic unit (albeit one having two outputs) is required for each electric motor, while still providing redundant motors for each fuel pump, thereby providing a single fault tolerant system having high reliability and low weight.

The or each power electronic unit may be powered by a DC electrical bus. The DC electrical bus may be supplied with power by an AC electrical generator driven by the gas turbine engine via a rectifier. First and second AC electrical generators may be provided, which may be driven by different shafts of the gas turbine engine.

The or one of the AC electrical generators may comprise a starter generator configured to operate as a motor in a starting mode, and as a generator in a generating mode. At least one of the power electronic units may have an output electrically coupled to the AC electrical generator to provide electrical power to the electrical generator when in the starting mode. Advantageously, the number of separate power electronics units is minimised, since one of the power electronics units can be used to provide electrical power to one of the electric motors driving one of the fuel pumps during normal operation, and to the starter generator during starting. This is possible since a relatively low fuel flow rate is required during starting, so only one injector and fuel pump may be required. In one embodiment, the first power electronics unit is coupled to the AC electrical generator to provide electrical power to the electrical generator when in the starting mode. It has been found that during starting, sufficient fuel can be supplied from the pilot injector only, so that the power supply that normally provides electrical power for the main fuel pump is not required.

One of the first and second electrical motors may be configured to drive an oil pump of the gas turbine engine. Advantageously, only two electrical motors are required to provide mechanical power for both the fuel pumps and the oil pump.

In one embodiment, the first electrical motor is configured to drive the oil pump. Consequently, the electrical motor having the lower in use load (since the fuel flow through the pilot injector is generally lower) is used to power the oil pump. This arrangement is particularly advantageous, since both the pilot injector and the oil pump are required throughout the flight. In view of the inherent redundancy provided by the doubly wound electrical motor, a single electrical failure will not result in loss of mechanical power for the oil pump. Consequently, this arrangement provides a system in which redundant operation is provided, in which no single electrical fault will cause either a loss of power, or a loss of oil supply, using only two electrical motors. The oil pump could include flow regulation to minimise waste, given motor speed control would be regulated for fuel flow control. This could include a variable displacement pump or valves beyond the oil pump.

### Brief Description of the Drawings

Fig. 1 shows a schematic view of a gas turbine engine;
Fig. 2 shows a cross sectional view of a combustor of the gas turbine engine of Fig. 1;
Fig. 3 is a fuel flow diagram of a prior fuel system for the gas turbine engine of Fig. 1;
Fig. 4 is an electrical diagram of a fuel system in accordance with a first embodiment of the present disclosure;
Fig. 5 is an electrical diagram of a fuel system in accordance with a second embodiment of the present disclosure;
Fig. 6 is a fuel flow diagram of a fuel system in accordance with the present disclosure;
Fig. 7 is a schematic view of an electric motor for use with the fuel system of the present disclosure;
Fig. 8 is a schematic view of a first alternative electric motor for use with the fuel system of the present disclosure;
Fig. 9 is a schematic view of a second alternative electric motor for use with the fuel system of the present disclosure; and
Fig. 10 is an electrical diagram of a power electronics unit for the electric motor of Figs. 8 or Fig. 9;

### Detailed Description

Fig. 1 shows a high-bypass gas turbine engine 10. The engine 10 comprises, in axial flow series, an air intake duct 11, an intake fan 12, a bypass duct 13, an intermediate pressure compressor 14, a high pressure compressor 16, a combustor 18, a high pressure turbine 20, an intermediate pressure turbine 22, a low pressure turbine 24 and an exhaust nozzle 25. The fan 12, compressors 14, 16 and turbines 20, 22, 24 all rotate about the major axis of the gas turbine engine 10 and so define the axial direction of gas turbine engine.

Air is drawn through the air intake duct 11 by the intake fan 12 where it is accelerated. A significant portion of the airflow is discharged through the bypass duct 13 generating a corresponding portion of the engine 10 thrust. The remainder is drawn through the intermediate pressure compressor 14 into what is termed the core of the engine 10 where the air is compressed. A further stage of compression takes place in the high pressure compressor 16 before the air is mixed with fuel and burned in the combustor 18. The resulting hot working fluid is discharged through the high pressure turbine 20, the intermediate pressure turbine 22 and the low pressure turbine 24 in series where work is extracted from the working fluid. The work extracted drives the intake fan 12, the intermediate pressure compressor 14 and the high pressure compressor 16 via shafts 26, 28, 30. The working fluid, which has reduced in pressure and temperature, is then expelled through the exhaust nozzle 25 and generates the remaining portion of the engine 10 thrust.

The combustor 18 is a staged combustor, having a pilot injector 54 and a main injector 58, each fed by a separate fuel line 52, 56, which each take fuel from a single fuel source, e.g. the fuel tank of an aircraft.

Fuel is provided to the combustor 18 by a fuel system, embodiments of which are described below.

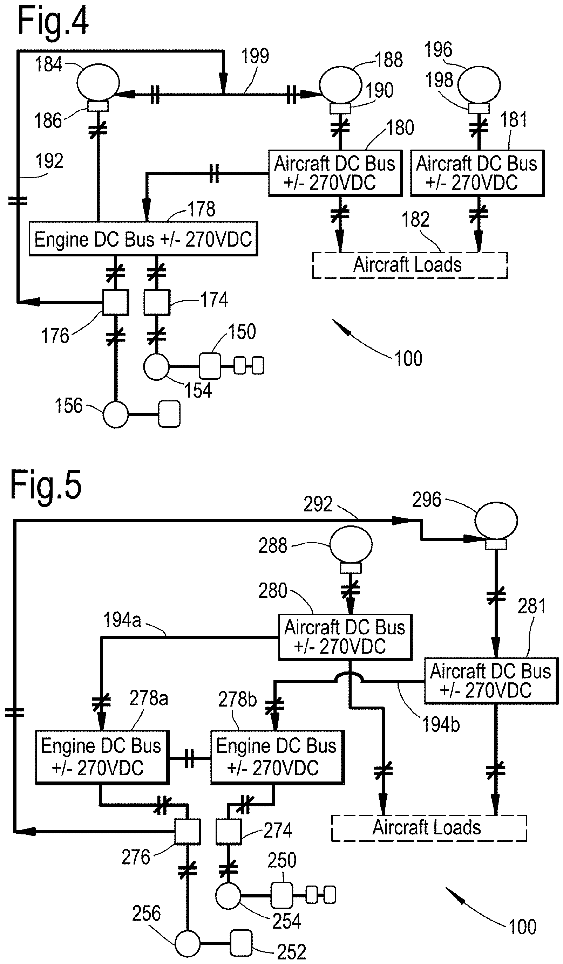

Fig. 4 illustrates an electrical network of a fuel system 100 in accordance with a first embodiment of the present disclosure.

The fuel system 100 comprises first and second variable flow rate fuel pumps 150, 152. The pumps 150, 152 could be of any type capable of varying their flow rate in accordance with varying input speed, such as a fixed displacement gear pump, where motor speed control is used in conjunction with a flow meter to ensure the pump delivers metered fuel flow in accordance with demand set by the engine control unit. Alternatively, the pumps 150, 152 could comprise a recirculation loop from a fuel metering unit back to the input of the pump (or fuel tank) to provide metered fuel to the respective injector 54, 58 should motor speed control not allow adequate accuracy .

The first pump 150 is configured to provide fuel flow to the pilot injector 152, while the second pump 152 is configured to provide fuel flow to the main injector 156. Each of the first and second pumps 150, 152 is driven by respective first and second AC electrical motors 154, 156.

AC electrical power for the AC motors 154, 156 is provided by respective first and second power electronics units 174, 176. The power electronics units 174, 176 are configured to convert DC electrical power from the electrical network to AC electrical power having a required frequency for the AC motors 154, 156. The power electronics units 174, 176 are each independently powered by DC power from an engine DC bus 178, which typically provides power at +/-270 volts DC.

The engine DC bus 178 is in turn powered by DC power from a first AC generator 184 via a rectifier 186, which converts the AC power from the AC generator 184 to DC power for the engine DC bus 178.

The electrical network further comprises first and second aircraft DC buses 180, 181 which each independently provide power to aircraft electrical loads 182 such as avionics, environmental control systems, and electrically powered actuators. The aircraft DC buses are each powered by respective second and third engine driven AC generators 188, 196 via respective rectifiers 190, 198 which convert the AC power from the second and third AC generators 188, 196 to DC power for the aircraft DC bus 180. Each of the first, second and third AC generators 184, 188, 196 is driven by respective one of the engine shafts 26, 28, 30. The rectifiers 186, 190, 198 could comprise diodes, or alternatively could comprise active front end AC/DC converters, which may reduce harmonics in the electrical network.

DC power is also provided to the engine DC bus 178 by an optional DC interconnector 194. The DC interconnector 194 is supplied with power by the second AC generator 188 via the first aircraft DC bus 180. In normal operation, power is provided to the engine DC bus 178 from the first generator 184. However, on failure of the generator 184 or rectifier 186, power can be provided from the first aircraft DC bus 180. Power can also be provided from the first aircraft DC bus 180 for starting of the starter generators 184, 188, and for shaft power transfer.

The first and second aircraft generators 184, 188 are starter-generators, i.e. they can act as either generators or motors, and so be used to start the engine 10 by causing rotation of the associated engine shafts 26, 28, 30. In order to provide AC power of the required frequency to use the generators 184, 188 as motors, power is provided from the second power electronics unit 176 via an AC interconnector 192. The second power electronics 176 are in turn supplied with DC power from an external source, such as a battery or auxiliary power unit (not shown), or from the first generator 184 if available. The second electric motor 156 will not generally be supplied with power from the second electronics unit 176 while power is being directed to the starter generator 184 for engine starting given the typically relatively large power rating required for starting. The main fuel pump 152 is generally not required on engine startup, and so this has no effect on engine operability. Consequently, engine starting can be provided with fewer power electronics units compared to prior arrangements.

The first and second generators 184, 188 are connected by an AC interconnection 199, which, in conjunction with the AC interconnection 192, can facilitate "power sharing" between the first and second generators 184, 188.

In use, the engine AC generators 184, 188, 196 impart a load on their respective shafts 26, 28, 30 in proportion to the aircraft and engine electrical loads. The capacity (i.e. the maximum electrical power each generator can produce, or the maximum torque each generator can accommodate) of each of these respective generators 184, 188, 196 and shafts 26, 28, 30 may vary in dependence on engine conditions. For example, during low speed engine operations (such as during aircraft descent), the third generator 196 may operate too slowly to cope with the electrical demands. Alternatively, a high power offtake from the generator 196 during these conditions may require compressor bleeds to be opened, which will results in reduced engine efficiency, and so increased fuel burn. Therefore an optimum power split can be found.

Ordinarily, the first generator 184 provides electrical power for engine electrical loads, with the second and third generators 188, 196 providing power for the aircraft electrical loads 182. Consequently, it is desirable to provide "power sharing", in which one generator 184 may provide a greater or lesser proportion of electrical load as required. However, each shaft 26, 28, 30 generally operates at a different speed. Consequently, high capacity power electronics are generally required for power sharing, to ensure that the frequency of the power of each generator matches that of the other generators.

In this example, AC power can be provided from the second power electronics unit 176 to the outputs of the second generator 188 via the AC interconnects 192, 199, thereby reducing the load on the second generator 188. An electrical bus may be included, not shown, to make the connection easier and controllable. The power electronics 176 can alter the frequency of the power output from the power electronics 176 to match the frequency of power from second generator 188, and also perform master and slave control, where one supply is controlled to act as a voltage source (most likely second generator 188) and another a current source (power electronics 176), to seamlessly reduce power from the generator 188 and increase it from the power electronics and ultimately from generator 184. The transfer would be controlled and gradual to prevent excessive change in power quality as viewed by the aircraft loads. This process is often referred to as paralleling generators/supplies. An increased proportion of the electrical load will thereby be provided from the first generator 184, with the first generator 184 effectively providing some of the electrical power for the aircraft loads 182, without a requirement for further power electronics. Again therefore, the overall requirement for power electronics for the system as a whole is reduced, while providing a high level of redundancy. This is enabled by the excess capacity inherent in an engine load generator 184 in certain parts of the flight cycle, such as descent, which also happens to be the period when HP offtake is undesirable and if HP offtake is decreased and IP or LP offtake increased fuel burn can be reduced, partly driven by handling bleed valve closures.

Fig. 5 illustrates an alternative electrical network for the fuel system 100. The electrical network also comprises first and second power electronics units 274, 276 and electrical motors 254, 256 driving first and second fuel pumps 250, 252 similar to those of the electrical network of Fig. 1, but comprises only second and third AC generators 288, 296, with the first AC generator and corresponding connections omitted. Instead, each AC generator 288, 296 provides power to independent respective first and second engine DC electrical buses 278a, 278b via their respective aircraft DC buses 280, 281 and DC interconnectors 194a, 194b. Generator 296 is driven by either the intermediate or high pressure shaft 28, 30, while generator 288 is driven by the low pressure shaft 26 (where the generator 296 is driven by the intermediate pressure shaft 28) or the intermediate pressure shaft 28 (where the generator 296 is driven by the high pressure shaft 30).

An AC interconnector 292 is provided, which electrically couples the second power electronics unit 276 to the generator 296. The power electronics unit 276 can therefore be used to provide power sharing where the generators 288, 296 are provided on different engine shafts 26, 28, 30, or provide AC electrical power to the generator 296 for engine starting.

Such an arrangement may be simpler and lighter, in view of the omitted first generator, but may be more difficult to certify in a civil aviation regulatory regime. In this case, both generators 288, 296 could be driven by the same engine shaft 26, 28, 30, or by independent shafts.

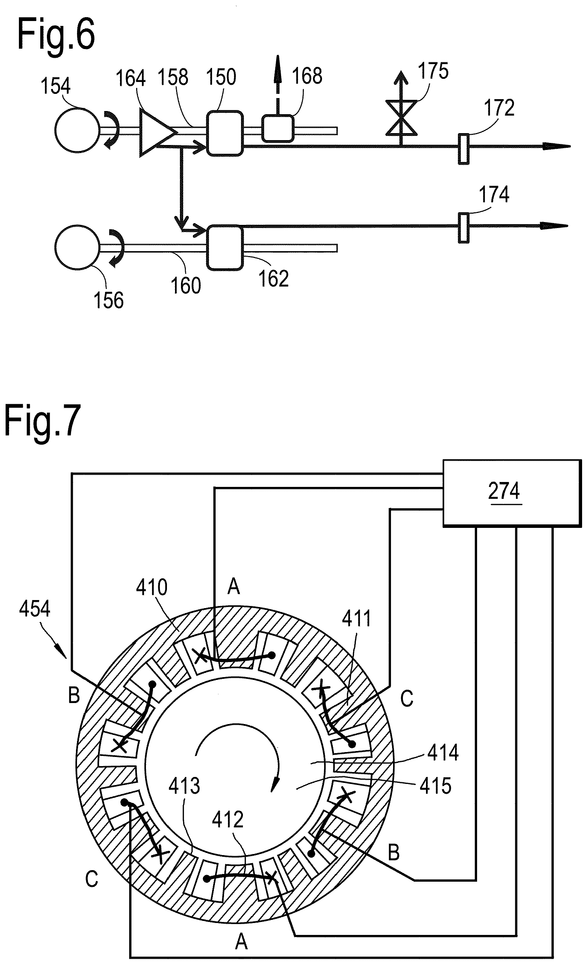

Fig. 6 schematically illustrates a first fuel flow diagram for the fuel system 100. The described fuel flow diagram could be employed with the electrical networks of either Figs. 4 or 5.

Each of the first and second pumps 150, 152 is driven by respective first and second AC electrical motors 154, 156 by a respective shaft 158, 160. Fuel is supplied to a low pressure pump 164 from an aircraft fuel tank (not shown) via a main fuel line 166. The low pressure pump 164 is typically in the form of a centrifugal pump, and is driven by the first motor 154 via the shaft 158. The low pressure pump 164 provides fuel to the pilot and main fuel injector pumps 150, 152 via a manifold 170, which splits the flow into respective pilot and main fuel lines 52, 56. A fuel oil heat exchanger (not shown) may be provided between the low pressure pump 164 and manifold 170.

Optionally, an oil pump 168 is also driven by the shaft 158, and pressurises engine oil for use in lubricating the engine 10. Consequently, both the main and pilot fuel injectors 54, 58 are supplied with fuel from pumps 150, 152 powered by separate electric motors. Meanwhile, the oil pump 168 is powered by the same electric motor 154 that powers the pilot pump 150. This is advantageous, since the pilot fuel pump 150 is always operating during normal engine running and engine starting, unlike the main fuel pump 152, which is only operated at high engine speeds. Since the oil pump 168 is driven by the same motor which drives the pilot fuel pump 150, the oil pump 168 and oil system must be capable of accommodating the variations in flow rate and pressure as a consequence of the variable flow rate required of the fuel pump 150. Consequently, the oil system may comprise a recirculation loop to prevent over pressurisation. Alternatively a variable displacement pump could be used, instead of the usual gear fixed displacement pump. Where the oil pump 168 is provided on the same shaft 158, 160 as one of the fuel pumps 150, 152, a "shear neck" may be provided on the corresponding shaft 158, 160, such that the coupling between the shaft 158, 160 and oil pump 168 breaks should the oil pump 168 become jammed or fail in some way. Consequently, fuel flow can still be provided during an oil pump 168 failure, which can allow more time before the engine 10 must be shutdown.

Pilot and main flow meters 172, 174 are generally provided downstream of the respective pilot and main fuel pumps 150, 152, to measure the flow to each injector 54, 56. These measurements can be used to control the speed of the motors 154, 156 to match the fuel flow supply to the demand, as determined by an engine management system (not shown). In some cases, a portion of the fuel downstream of the pilot fuel pump 150 may be diverted via an optional valve 175 to provide fuel to a fuel actuation system. In such cases, the flow meters 172, 174 will be provided downstream of the fuel actuator valve 175.

Each motor 154, 156 comprises a variable speed polyphase motor, having concentrated stator windings. Each motor will have concentrated phase coils. A concentrated coil comprises a coil that does not share a slot with other coils and does not overlap with another coil. In other words, each concentrated coil is round around a single stator tooth, with no other stator coils being wrapped around that tooth. In some cases, stator coils are only wrapped around alternate teeth, such that only one coil is located on each side of each tooth. This way each coil can be magnetically isolated from other coils preventing cascade failures. This can be further improved with thermal insulation between coils, alternatively sufficient cooling and/or coil circumferential separation can be used. Each phase coil, or group of phases can be electrical isolated from the others, driving each phase or group of phases independently with its own power electronics unit/channel. If driving each phase individually this can be achieved using an H-bridge converter for each phase. If driving sets of phases a more typical multi leg inverter can be used, with 2 switches per phase and phases within that group electrically connected, star or delta connection are typical.

Fig. 7 shows an example of a 3-phase motor 454 having a stator 410 and a rotor 414. In this case, the stator 410 is for a switched reluctance motor. The stator 410 comprises six salient stator poles 411 around which is wound a separate stator winding (for a total of six phases), and the rotor 414 comprises four salient rotor poles / teeth 415. Each stator pole 411 comprises an electrical winding 412, with the windings 412 of each pole being non-overlapping with windings of other stator poles (i.e. concentrated). Each stator pole winding 412 has its own electrically isolatable power electronics channel in unit 274. It should be noted that the diagram is a simplification and to be truly fault tolerant the electrical windings 412 of one pole should not be in physical contact with an adjacent winding. Intermediary teeth 413 are included (which have no coil wrapped around them) to separate adjacent sets of windings 412.

Figure 7 shows a 3 phase machine. 3 phases is thought to be the minimum for most applications, and is thought to be sufficient given the loss of one of the isolated 3 phases, since the loss of one phase would still yield a motor with 66% of its rated power. Note coils A and A, B and B, and C and C are electrically connected together, thereby defining three electrical phases. The concentrated coils are clearly shown here where each coil is wrapped around a single tooth 411 and such that it is the only coil occupying the slots on each side of that tooth (i.e. only every other tooth has a coil wound around it). Such an arrangement helps to ensure both low mutual coupling with the other coils (especially those of other phases) and good thermal isolation between coils. Such arrangements may have smaller intermediary teeth 413 as shown, or they could be of the same width as the wound teeth 411, or may even be thicker. These intermediary teeth help to achieve a synchronous reactance of around 1 per unit, as is typically desired in fault tolerant machines. Like the rest of the stator, these intermediary teeth 413 are typically made from soft magnetic laminations (e.g. SiFe). These intermediary teeth 413 can have secondary functions such as thermal isolation of the phases, by including direct thermal cooling (air or fluid), in a cooling channel in the intermediary teeth 413.

In operation, the timing of the pulses from the phase coils could be rearranged to ensure that torque ripples caused by the non-symmetrical placing of the remaining actives coils is eliminated - this can simply be achieved by measuring rotor position and timing the pulses from the remaining phases coils so that the effective position of the phase coils appears symmetrical from the rotors' perspective (i.e. the pulse from one set of the phase coils is delayed in time, relative to normal operation).

Each motor 154, 156 (or 254, 256) is rated to provide sufficient motive power to drive the respective pumps during normal operation to enable staged combustion (e.g. motor 154 is rated to provide sufficient motive force such that the pump 154 can provide sufficient fuel for the pilot injector 54 for 50% engine thrust, while motor 156 is rated to provide sufficient motive force such that the pump 156 can provide sufficient fuel for the main injector 56 for 100% engine thrust). Consequently, in this example, the motors 154, 156 are rated to provide sufficient motive force to provide fuel rates to the injectors 54, 56 corresponding to 150% engine thrust. In the event of loss of a single phase in a stator in either motor, sufficient motive power will still be available for 100% thrust from the remaining phases of the motors 154, 156.

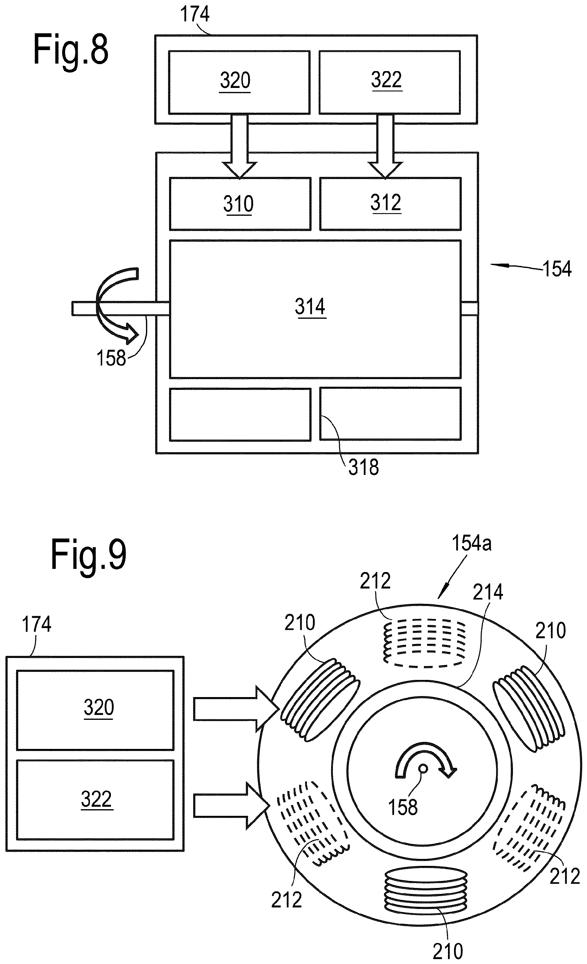

Fig. 8 shows a cross sectional view of a first alternative motor 154, showing the electrical connections of the motor 154. In this embodiment, motor 156 is similar to motor 154. The motor 154 is a dual wound three phase motor having first and second electrically isolated polyphase stator sets 310, 312 comprising concentrated coils, and a common rotor 314. In this embodiment, the motor 154 comprises a three phase motor, though the invention is applicable to motors having two or more electrical phases. Importantly, the first and second stator sets 310, 312 are magnetically isolated. This distinguishes this arrangement from a six-phase arrangement, in which there is one radial magnetic circuit.

The rotor 314 is mounted on shaft 158, such that rotation of the rotor 314 causes rotation of the shaft 158. The rotor 314 comprises a plurality of pole pairs (not shown), which may be either electromagnetic (comprising electrical windings carrying DC or AC current) or may comprise permanent magnets. Alternatively, the rotor 314 may comprise an induction motor rotor such as a squirrel cage or a reluctance rotor.

The stator windings 310, 312 are internally electrically isolated from one another, i.e. there are no electrical connections between the first and second stator sets 310, 312, such that an electrical fault in one set will not cause a "cascade failure" in the other set. In this sense, the motor is said to be "fault tolerant". The stators sets 310, 312 are also physically and thermally isolated from one another by a gap 318 between the stator sets 310, 312, which may be filled with an insulating material.

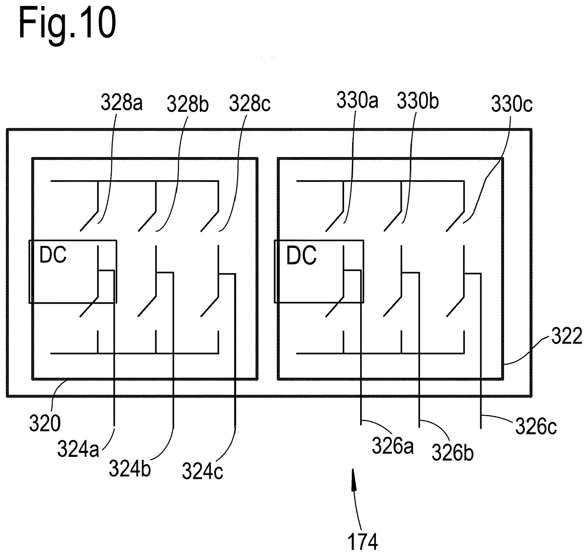

AC electrical power for both the stator sets 310, 312 is provided by a single dual channel power electronics unit 174. The power electronics unit 174 comprises first and second electrical outputs (or "channels") 320, 322, which provide polyphase AC power to the respective first and second stators sets 310, 312. The first and second outputs have the same number of phases, and for the tandem motor have the same angular position in a phasor diagram as one another (i.e. the pulse to the phase coils are aligned in time), and are powered by the separate switching units shown in figure 10 internal to the power electronics unit 174. Each power electronics unit is contained within a single housing, which provides mechanical containment and cooling arrangements for both channels 320, 322, though alternatively each channel could have its own housing and cooling arrangement.

Fig. 10 shows the dual channel power electronics unit 174 in more detail. Free wheeling diodes, filters and controllers are not shown for simplicity. Each channel 320, 322 has its own connection 324a, 324b, 324c, 326a, 326b, 326c to the respective DC bus 194a, 194b, where each connection 324a, 324b, 324c, 326a, 326b, 326 has its own contactor 328a-c, 330a-c. This ensures an electric fault in one channel 320, 322 does not cascade to the other channel via the DC link. The power electronics unit 174 comprises 2 channels each with its own 3 phase inverter, with 6 switching devices in each, given a total of 12 devices. Consequently, the system is single electrical fault tolerant while having a relatively small number of power electronics switches. In comparison, a multi phase fault tolerant electrical motor would normally require isolated power electronics for each phase, for example H-bridge inverters Given a isolatable channel is needed for each phase, albeit one with less switches, the unit overall is more complex.

Each phase could have more than one coil (parallel and series connected), with the phases forming a repeating equally spaced circumferential pattern around the machine. The coils would be concentrated (i.e. with each coil having its own slot), with no overlaps or shared magnetic circuits with other phase coils.
In normal operation, both sets of stators 310, 312 are provided with AC electrical power from the output channel 320, 322 of the power electronics unit 174, such that torque is provided from both sets of stators. However, in the event of an electrical failure such as an internal "turn-to-turn" fault within one of the stator windings 310, 312, the electrical current through the failed stator coil, using the remaining working turns, is controlled by the power electronics unit to oppose the field generated in the faulted turn.

Fig. 9 shows a cross sectional view of an alternative motor 154a. The motor 154a comprises a stator having first and second polyphase stator sets 210, 212. In the described embodiment, each polyphase stator set 210, 212 has three phases, though two or more phases could be employed. The polyphase stator sets 210, 212 are circumferentially spaced around the circumference of the motor 254, with each stator of the first set 210 being spaced from one another by a stator of the second set 212.

Again, the first and second stator sets 210, 212 are electrically, thermal and physically isolated from one another. In the event of an internal turn to turn fault, again the power electronic unit portion for that phase is used to oppose the field in the shorted phases. Note in this embodiment given the 3 phases are powered by a 6 switch inverter (not H bridges), if one phase has a fault the other phases are not used. The other independent set, with its own 6 switch inverter is used to provide the required minimum power following a single electrical fault.

Again, AC electrical power for both sets 210, 212 is provided by the single dual channel power electronics unit 174. The power electronics unit 174 comprises first and second electrical outputs 320, 322, which provide polyphase AC power to the respective first and second stators sets 310, 312. The first and second outputs in this case are likely to have their phase angle shifted relative to the other set, to ensure stable torque production, given the phase coils have a different circumferential position relative to the rotor, therefore the timing of the power to the coils needs to aligned to ensure torque ripple is low. Symmetrical spacing is typical, and the phases are powered by the switching units internal to the power electronics unit 174.

The motor 154a further comprises a rotor 214 which is coupled to the shaft 158. The rotor comprises a plurality of pole pairs (not shown) which comprise either permanent magnets or electromagnetic windings or induction windings or a reluctance rotor. As power is applied to the stator sets 210, 212, the rotor 214 rotates, thereby rotating the shaft 158. However, this embodiment differs from that of Fig. 8, in that the two stator sets 210, 212 interact with a single rotor 214, thereby forming a single magnetic circuit. Therefore to ensure an electrical fault does not cascade to other phases, concentrated coils must be used, where overlapping of phases in the slots is not allowed. In addition in the event of an internal turn to turn fault the power electronics must be used to oppose the field generated in the faulted turns. The amount of power required could be achieved by measuring the field in the shorted winding using a magnetic senor probe. This method is described for example in EP 1647078.

Since the stator sets 210, 212, 310, 312 of either motor 154, 254 are electrically isolated from one another, and are powered by separate electrical outputs from the power electronics 174, a failure in one of the sets of stators will not cause a failure in the other set. Consequently, each electrical motor 154, 156 in the fuel system 100 will be capable of producing approximately 50% of its rated power in the event of a single electrical failure.

In normal operation of the fuel system, fuel is provided to the combustor 18 via the injectors 54, 58 at varying rates, in order to provide the required engine thrust, while providing lean burn operation. However, on failure of one of the stator sets 310, 312, 210, 212 of one of the motors 154, 156, power can still be provided to the fuel pumps 150, 152, albeit at a reduced rate for the one of the pumps 150, 152 driven by the faulty motor 154, 156. Consequently, to produce full power, one of the pumps 150, 152 may have to be operated at a higher rate than would normally be required, and consequently, lean burn combustion may not be possible. However, full engine thrust could still be provided, which may be a requirement in the event of a single electrical failure in one of the motors 154, 156. The oil pump 168 would continue in normal operation, since the oil pump 168 only requires less than 50% of the electrical rating of the motor 154, given the motor will be sized to provide the oil pump power and the minimum fuel pump power required in the event of a single electrical fault in this motor. In one specific example, during normal operation at full power, approximately 10% of the engine fuel flow is provided by the pilot injector 54, with 90% of the engine fuel flow being provided by the main injector 58. On failure of one of the stator sets 210, 212 of the second motor 156, only 50% of the engine fuel flow can be provided by the main injector 58. Consequently, in this situation, the engine is configured to operate the pilot injector 54 to provide the remainder of the fuel flow, with the main injector 58 providing 50% of the fuel flow. One of the motors 154, 156 may be temporarily operated at greater than 100% of their nominal maximum rating while the other motor accelerates to cope with the fault.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

For example, the fuel system may comprise a different electrical network. Where the aircraft electrical bus comprises an AC bus for example, the DC engine bus could be supplied with power either directly from an engine generator or from the AC bus via a rectifier. If LP generators are used and an AC aircraft network, AC to AC converters could be used on the LP generators. In addition these converters could be placed on the aircraft where cooling is more available.

Further interconnections could be provided between components. For example, an AC interconnect could be provided between the first power electronics unit 174 and one of the second and third generators 188, 196 to provide further power for engine starting and / or power sharing. However, in this case the power output from the power electronics unit 174 would have to be synchronised for both the electric motor 154 and the generator 188, 196.

The fuel system could comprise separate low pressure fuel pumps for each of the pilot and main fuel flows. In addition a valve could be added to prevent LP fuel flow in the main injector when not needed. Further pumps could be driven by the main and pilot motors, such as a vent pump.

Radial flux machines have been shown; axial flux motors could be used and are known in the art. In addition in-runner motors have been shown (with the rotor provided radially inside the stator), but out runner motors could be used.

## Claims

1. A fuel system for a gas turbine engine (10), the gas turbine engine (10) comprising a combustor (18) having a pilot fuel injector (54) and a main fuel injector (58), the fuel system comprising:
a first variable flow fuel pump (150) configured to provide metered fuel flow to the pilot injector (54), and a second variable flow fuel pump (152) configured to provide a metered fuel flow to the main injector (58); and
first and second variable speed electric motors (154, 156) configured to drive respective first and second fuel pumps (150, 152); wherein
each of the electric motors (154, 156) comprises a polyphase motor (154, 156) comprising a stator having concentrated windings (412), **characterised in that** each motor (154, 156) comprises at least first and second electrically isolated sets of polyphase stator windings (310, 312), the first and second stator windings (310, 312) of each electrical motor (154, 156) being configured to drive a common rotor (414), and each set of polyphase stator windings (310, 312) comprising three electrical phases.

2. A fuel system according to claim 1, wherein the electrically isolated stator windings (310, 312) are each thermally isolated.

3. A fuel system according to any of the preceding claims, wherein fuel the system comprises first and second power electronics units (274, 276), each being configured to provide AC electrical power to a respective first and second electrical motor (154, 156).

4. A fuel system according to claim 3, wherein each power electronic unit (274, 276) comprises first and second electrically isolated outputs, each output being electrically coupled to a respective one of the set of stator windings (312, 314) of the respective motor (154, 156) to provide AC electrical power to the respective set of windings (312, 314).

5. A fuel system according to claim 3 or claim 4, wherein each power electronic unit (174, 176) is configured to be powered by a DC electrical bus (178).

6. A fuel system according to claim 5, wherein the DC electrical bus (178) is configured to be supplied with power by an AC electrical generator (184, 188) driven by the gas turbine engine (10) via a rectifier (186, 190).

7. A fuel system according to claim 6, wherein first and second AC electrical generators (184, 186) are provided, which are configured to be driven by different shafts (26, 28, 30) of the gas turbine engine (10).

8. A fuel system according to claim 6 or claim 7, wherein the or one of the AC electrical generators (184, 188) comprise a starter generator configured to operate as a motor in a starting mode, and as a generator in a generating mode.

9. A fuel system according to claim 8, wherein at least one of the power electronic units (176) has an output electrically coupled to the AC electrical generator (184, 188) to provide electrical power to the electrical generator (184, 188) when in the starting mode.

## Patentansprüche

1. Kraftstoffsystem für einen Gasturbinenmotor (10), wobei der Gasturbinenmotor (10) eine Brennkammer (18) umfasst, die eine Pilotkraftstoffeinspritzvorrichtung (54) und eine Hauptkraftstoffeinspritzvorrichtung (58) aufweist, wobei das Kraftstoffsystem Folgendes umfasst:
eine erste Kraftstoffpumpe mit variablem Fluss (150), die konfiguriert ist, um der Piloteinspritzvorrichtung (54) abgemessenen Kraftstofffluss bereitzustellen, und eine zweite Kraftstoffpumpe mit variablem Fluss (152), die konfiguriert ist, um der Haupteinspritzvorrichtung (58) einen abgemessenen Kraftstofffluss bereitzustellen; und
erste und zweite Elektromotoren mit variabler Drehzahl (154, 156), die konfiguriert sind, um jeweilige erste und zweite Kraftstoffpumpen (150, 152) anzutreiben; wobei
jeder der Elektromotoren (154, 156) einen Mehrphasenmotor (154, 156) umfasst, der einen Stator umfasst, der konzentrierte Windungen (412) aufweist, **dadurch gekennzeichnet, dass** jeder Motor (154, 156) zumindest erste und zweite elektrisch isolierte Sätze an Mehrphasenstatorwindungen (310, 312) umfasst, wobei die ersten und zweiten Statorwindungen (310, 312) jedes Elektromotors (154, 156) konfiguriert sind, um einen gemeinsamen Rotor (414) anzutreiben, und jeder Satz an Mehrphasenstatorwindungen (310, 312) drei elektrische Phasen umfasst.

2. Kraftstoffsystem nach Anspruch 1, wobei die elektrisch isolierten Statorwindungen (310, 312) jeweils thermisch isoliert sind.

3. Kraftstoffsystem nach einem der vorhergehenden Ansprüche, wobei das Kraftstoffsystem erste und zweite Leistungselektronikeinheiten (274, 276) umfasst, die jeweils konfiguriert sind, um einem jeweiligen ersten und zweiten Elektromotor (154, 156) elektrische Wechselstromleistung bereitzustellen.

4. Kraftstoffsystem nach Anspruch 3, wobei jede Leistungselektronikeinheit (274, 276) erste und zweite elektrisch isolierte Ausgänge umfasst, wobei jeder Ausgang elektrisch an eine jeweilige aus dem Satz an Statorwindungen (312, 314) des jeweiligen Motors (154, 156) gekoppelt ist, um dem jeweiligen Satz an Windungen (312, 314) elektrische Wechselstromleistung bereitzustellen.

5. Kraftstoffsystem nach Anspruch 3 oder Anspruch 4, wobei jede Leistungselektronikeinheit (174, 176) konfiguriert ist, um von einem elektrischen Gleichstrombus (178) angetrieben zu werden.

6. Kraftstoffsystem nach Anspruch 5, wobei der elektrische Gleichstrombus (178) konfiguriert ist, um von einem elektrischen Wechselstromgenerator (184, 188), der über einen Gleichrichter (186, 190) von dem Gasturbinenmotor (10) angetrieben wird, mit Leistung versorgt zu werden.

7. Kraftstoffsystem nach Anspruch 6, wobei erste und zweite elektrische Wechselstromgeneratoren (184, 186) bereitgestellt sind, die konfiguriert sind, um von unterschiedlichen Wellen (26, 28, 30) des Gasturbinenmotors (10) angetrieben zu werden.

8. Kraftstoffsystem nach Anspruch 6 oder Anspruch 7, wobei der oder einer von den elektrischen Wechselstromgeneratoren (184, 188) einen Startergenerator umfasst, der konfiguriert ist, um als Motor in einem Startmodus und als Generator in einem erzeugenden Modus zu arbeiten.

9. Kraftstoffsystem nach Anspruch 8, wobei zumindest eine der Leistungselektronikeinheiten (176) einen Ausgang aufweist, der elektrisch an den elektrischen Wechselstromgenerator (184, 188) gekoppelt ist, um dem elektrischen Generator (184, 188) elektrische Leistung bereitzustellen, wenn er sich in dem Startmodus befindet.

## Revendications

1. Système de carburant pour moteur à turbine à gaz (10), ledit moteur à turbine à gaz (10) comprenant une chambre de combustion (18) possédant un injecteur de carburant pilote (54) et un injecteur de carburant principal (58), ledit système de carburant comprenant :
une première pompe de carburant à débit variable (150) conçue pour fournir un débit de carburant mesuré à l'injecteur pilote (54) et une seconde pompe de carburant à débit variable (152) conçue pour fournir un débit de carburant mesuré à l'injecteur principal (58) ; et
des premier et second moteurs électriques à vitesse variable (154, 156) conçus pour entraîner les première et seconde pompes de carburant respectives (150, 152) ;
chacun des moteurs électriques (154, 156) comprenant un moteur polyphasé (154, 156) comprenant un stator possédant des enroulements concentrés (412), **caractérisé en ce que** chaque moteur (154, 156) comprend au moins des premier et second ensembles isolés électriquement d'enroulements de stator polyphasés (310, 312), lesdits premier et second enroulements de stator (310, 312) de chaque moteur électrique (154, 156) étant conçu pour entraîner un rotor commun (414) et chaque ensemble d'enroulements de stator polyphasés (310, 312) comprenant trois phases électriques.

2. Système de carburant selon la revendication 1, lesdits enroulements de stator isolés électriquement (310, 312) étant chacun isolés thermiquement.

3. Système de carburant selon l'une quelconque des revendications précédentes, ledit système de carburant comprenant des première et seconde unités électroniques d'alimentation (274, 276), chacune étant conçue pour fournir une alimentation électrique en courant alternatif (CA) à un premier et à un second moteur électrique respectif (154, 156).

4. Système de carburant selon la revendication 3, chaque unité électronique d'alimentation (274, 276) comprenant des première et seconde sorties isolées électriquement, chaque sortie étant couplée électriquement à un enroulement de stator respectif de l'ensemble d'enroulements de stator (312, 314) du moteur respectif (154, 156) pour fournir une alimentation électrique CA à l'ensemble d'enroulements respectif (312, 314).

5. Système de carburant selon la revendication 3 ou 4, chaque unité électronique d'alimentation (174, 176) étant conçue pour être alimentée par un bus électrique en courant continu (CC) (178).

6. Système de carburant selon la revendication 5, ledit bus électrique CC (178) étant conçu pour être alimenté en courant par un générateur électrique CA (184, 188) entraîné par le moteur à turbine à gaz (10) par l'intermédiaire d'un redresseur (186, 190).

7. Système de carburant selon la revendication 6, lesdits premier et second générateurs électriques CA (184, 186) étant fournis, conçus pour être entraînés par différents arbres (26, 28, 30) du moteur à turbine à gaz (10).

8. Système de carburant selon la revendication 6 ou 7, ledit ou l'un desdits générateurs électriques CA (184, 188) comprenant un générateur de démarrage conçu pour fonctionner en tant que moteur dans un mode de démarrage, et en tant que générateur dans mode de génération.

9. Système de carburant selon la revendication 8, au moins l'une des unités électroniques d'alimentation (176) possédant un sortie couplée électriquement au générateur électrique CA (184, 188) pour fournir une alimentation électrique au générateur électrique (184, 188) lorsqu'il est dans un mode de démarrage.
